(19) Europäisches Patentamt
European Patent Office
Office européen des brevets

(11) EP 4 804 568 A1

(12) EUROPEAN PATENT APPLICATION
published in accordance with Art. 153(4) EPC

(43) Date of publication:
**09.09.2026 Bulletin 2026/37**

(21) Application number: **23957171.4**

(22) Date of filing: **31.10.2023**

(51) International Patent Classification (IPC):
***H04S 7/00*** (2006.01) ***G10L 19/008*** (2013.01)
***H04S 3/00*** (2006.01) ***H04N 19/20*** (2014.01)
***H04N 19/42*** (2014.01)

(52) Cooperative Patent Classification (CPC):
**G10L 19/008; H04N 19/20; H04N 19/42;**
H04S 3/008; H04S 2420/03

(86) International application number:
**PCT/CN2023/128806**

(87) International publication number:
**WO 2025/091294 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Xiaomi Mobile Software Co., Ltd.**
**Beijing 100085 (CN)**

(72) Inventor: **WANG, Bin**
**Beijing 100085 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

# (54) ENCODING AND DECODING METHOD, TERMINAL, NETWORK DEVICE, AND STORAGE MEDIUM

(57) The present disclosure relates to an encoding and decoding method and apparatus, and a storage medium. The encoding and decoding method is executed by an encoder, and comprises: downmixing sound channels in at least one sound channel group, and generating sound channel information of each sound channel group, wherein there are N first sound channel groups and M second sound channel groups among the at least one sound channel group, the first sound channel group comprises three sound channels, the second sound channel group comprises two sound channels, N is 1, and N is a non-negative integer. In the embodiment, the problem of downmixing sound channels and then generating corresponding sound channel information is solved, and a scheme for generating sound channel information of each sound channel group is provided, thereby ensuring that each sound channel group has corresponding sound channel information, ensuring the accuracy of a generated sound channel group, thus ensuring encoding and decoding reliability.

encoder
decoder
S2101: downmixing channels in one or more channel groups to generate channel information for the one or more channel groups respectively
S2102: sending the channel information of the one or more channel groups
S2103: decoding the channel information of the one or more channel groups to obtain the channel information for the one or more channel groups respectively

Fig.2

EP 4 804 568 A1

## Description

## FIELD

The present disclosure relates to the field of communication technologies, and in particular, to an encoding and decoding method, a terminal, a network device, and a storage medium.

## BACKGROUND

With the rapid development of multimedia technologies, audio can be applied in various fields. In order to improve the spatial sense and orientation sense of audio, three-dimensional encoding and three-dimensional decoding may be performed on the audio, so that the audio heard by a user is indistinguishable from the audio heard in an actual environment.

## SUMMARY

The present disclosure solves the problem of generating corresponding channel information after downmixing channels, and provides a solution for generating channel information for each channel group, thereby ensuring that each channel group has corresponding channel information, ensuring the accuracy of the generated channel groups, and further ensuring the reliability of encoding and decoding.

The present disclosure provides an encoding and decoding method, an apparatus, and a storage medium.

According to a first aspect of the present disclosure, an encoding and decoding method is provided, where the method is performed by an encoder, and the method includes:
downmixing channels in one or more channel groups to generate channel information for the one or more channel groups respectively, where the one or more channel groups includes N first channel groups and M second channel groups, the first channel groups each include three channels, the second channel groups each include two channels, N is 1, and M is a non-negative integer.

According to a second aspect of the present disclosure, an encoding and decoding method is provided, where the method is performed by a decoder, and the method includes:
decoding channel information of one or more channel groups to obtain the channel information for the one or more channel groups respectively, where the one or more channel groups includes N first channel groups and M second channel groups, the first channel groups each include three channels, the second channel groups each include two channels, N is 1, and M is a non-negative integer.

According to a third aspect of the present disclosure, an encoding and decoding method is provided, where the method includes:

downmixing, by an encoder, channels in one or more channel groups to generate channel information for the one or more channel groups respectively, where the one or more channel groups includes N first channel groups and M second channel groups, the first channel groups each include three channels, the second channel groups each include two channels, N is 1, and M is a non-negative integer; and
decoding, by a decoder, channel information of one or more channel groups to obtain the channel information for the one or more channel groups respectively.

According to a fourth aspect of the present disclosure, an encoding and decoding apparatus is provided, including:
a processing module configured to downmix channels in one or more channel groups to generate channel information for the one or more channel groups respectively, where the one or more channel groups includes N first channel groups and M second channel groups, the first channel groups each include three channels, the second channel groups each include two channels, N is 1, and M is a non-negative integer.

According to a fifth aspect of the present disclosure, an encoding and decoding apparatus is provided, including:
a processing module configured to decode channel information of one or more channel groups to obtain the channel information for the one or more channel groups respectively, where the one or more channel groups includes N first channel groups and M second channel groups, the first channel groups each include three channels, the second channel groups each include two channels, N is 1, and M is a non-negative integer.

According to a sixth aspect of the present disclosure, an encoding and decoding apparatus is provided, including:

one or more processors;
where the encoding and decoding apparatus is configured to perform the method according to any one of the first

aspect.

According to a seventh aspect of the present disclosure, an encoding and decoding apparatus is provided, including:

one or more processors;
where the encoding and decoding apparatus is configured to perform the method according to any one of the second aspect.

According to an eighth aspect of the present disclosure, an encoding and decoding system is provided, including: an encoder and a decoder, where the encoder is configured to implement the encoding and decoding method according to the first aspect, and the decoder is configured to implement the encoding and decoding method according to the second aspect.

According to a ninth aspect of the present disclosure, a storage medium is provided, where the storage medium stores instructions, and when the instructions are executed on a communication device, the communication device is caused to perform the method according to any one of the first aspect or the second aspect.

## BRIEF DESCRIPTION OF THE DRAWINGS

The accompanying drawings described here are used to provide a further understanding of the embodiments of the present disclosure and constitute a part of the present disclosure. The schematic embodiments of the present disclosure and the descriptions thereof are used to explain the embodiments of the present disclosure and do not constitute an undue limitation on the embodiments of the present disclosure. In the drawings:

FIG. 1 is a schematic architectural diagram of an encoding and decoding system according to an embodiment of the present disclosure;
FIG. 2 is a schematic interaction diagram of an encoding and decoding method according to an embodiment of the present disclosure;
FIG. 3A is a schematic flowchart of an encoding and decoding method according to an embodiment of the present disclosure;
FIG. 3B is a schematic flowchart of an encoding and decoding method according to an embodiment of the present disclosure;
FIG. 4 is a schematic flowchart of an encoding and decoding method according to an embodiment of the present disclosure;
FIG. 5 is a schematic flowchart of an encoding and decoding method according to an embodiment of the present disclosure;
FIG. 6 is a schematic flowchart of an encoding and decoding method according to an embodiment of the present disclosure;
FIG. 7A is a schematic structural diagram of an encoding and decoding apparatus according to an embodiment of the present disclosure;
FIG. 7B is a schematic structural diagram of an encoding and decoding apparatus according to an embodiment of the present disclosure;
FIG. 8A is a schematic structural diagram of a communication device according to an embodiment of the present disclosure; and
FIG. 8B is a schematic structural diagram of a chip according to an embodiment of the present disclosure.

## DETAILED DESCRIPTION

The present disclosure provides an encoding and decoding method, an apparatus, and a storage medium.

According to a first aspect of the present disclosure, an encoding and decoding method is provided, where the method is performed by an encoder, and the method includes:
downmixing channels in one or more channel groups to generate channel information for the one or more channel groups respectively, where the one or more channel groups includes N first channel groups and M second channel groups, the first channel groups each include three channels, the second channel groups each include two channels, N is 1, and M is a non-negative integer.

In the above embodiment, the problem of generating corresponding channel information after downmixing channels is solved, and a solution for generating channel information for each channel group is provided, thereby ensuring that each channel group has corresponding channel information, ensuring the accuracy of the generated channel groups,

and further ensuring the reliability of encoding and decoding.

In combination with some embodiments of the first aspect, in some embodiments, the channel information includes a first quantity of the one or more channel groups.

In the above embodiment, the first quantity is included to indicate the quantity of channel groups, thereby ensuring the accuracy of the indicated number of channel groups.

In combination with some embodiments of the first aspect, in some embodiments, the channel information includes a first information field, where the first information field is used to indicate the first quantity of the one or more channel groups.

In combination with some embodiments of the first aspect, in some embodiments, the first information field takes a first value and is used to indicate that the first quantity exists, or,
the first information field takes a second value and is used to indicate that the first quantity does not exist.

In the above embodiment, whether the first quantity exists is indicated by different values of the first information field, thereby reducing resources occupied by the first information field and improving resource utilization.

In combination with some embodiments of the first aspect, in some embodiments, the channel information further includes a group identifier of the corresponding channel group, where group identifiers are in a one-to-one correspondence with channel identifiers in the one or more channel groups.

In the above embodiment, the channel group is indicated by the group identifier, thereby ensuring the accuracy of the indicated channel group.

In combination with some embodiments of the first aspect, in some embodiments, the one-to-one correspondence between the group identifiers and the channel identifiers in the one or more channel groups is stored in an index table.

In the above embodiment, the correspondence is stored in an index table, and the channels included in the channel group can be determined by looking up the table, thereby ensuring the accuracy of determining the channels included in the channel group.

In combination with some embodiments of the first aspect, in some embodiments, the one-to-one correspondence between the group identifiers and the channel identifiers in the one or more channel groups is determined based on a quantity of channels in the one or more channel groups and the channel identifiers in the one or more channel groups.

In the above embodiment, the correspondence is determined based on a quantity of channels in the one or more channel groups and the channel identifiers in the one or more channel groups, thereby ensuring flexibility in determining the correspondence and ensuring the accuracy of determining the channels included in the channel group.

In combination with some embodiments of the first aspect, in some embodiments, the channel information includes a second information field, where the second information field is used to indicate the group identifier of the corresponding channel group.

In combination with some embodiments of the first aspect, in some embodiments, a maximum quantity of bits of the second information field is determined based on a quantity of channels in the corresponding channel group.

In combination with some embodiments of the first aspect, in some embodiments, the channel information further comprises an energy parameter of the corresponding channel group, where the energy parameter is used to adjust an energy of the corresponding channel group.

In the above embodiment, the energy of the channel group is adjusted by including the energy parameter, thereby ensuring the accuracy of adjusting the channel group.

In combination with some embodiments of the first aspect, in some embodiments, the energy parameter is determined based on a channel energy of the corresponding channel group and/or a quantization codebook, where the quantization codebook includes a correspondence between an identifier and an identifier value.

In combination with some embodiments of the first aspect, in some embodiments, the method further includes:

obtaining respectively channel energies of channels in the corresponding channel group;
determining an average channel energy based on the channel energies of the channels obtained;
determining respectively adjustment factors for the channels in the corresponding channel group based on the channel energies of the channels and the average channel energy;
determining the energy parameter based on a quantized parameter obtained by quantizing the adjustment factor.

In combination with some embodiments of the first aspect, in some embodiments, the method further includes: the first quantity is 0, or the first quantity is a first value, determining that the group identifier and the energy parameter do not exist; or,
the first quantity is greater than 0, or the first quantity is a second value, determining that the group identifier and the energy parameter exist.

In combination with some embodiments of the first aspect, in some embodiments, the one or more channel groups are the N first channel groups, or the one or more channel groups are the M second channel groups.

In a second aspect, the present disclosure provides an encoding and decoding method, where the method is performed by a decoder, and the method includes:
decoding channel information of one or more channel groups to obtain the channel information for the one or more channel groups respectively, where the one or more channel groups includes N first channel groups and M second channel groups, the first channel groups each include three channels, the second channel groups each include two channels, N is 1, and M is a non-negative integer.

In combination with the second aspect, in some embodiments, the channel information includes a first quantity of the one or more channel groups.

In combination with the second aspect, in some embodiments, the channel information includes a first information field, where the first information field is used to indicate the first quantity of the one or more channel groups.

In combination with the second aspect, in some embodiments, the first information field takes a first value and is used to indicate that the first quantity exists, or,
the first information field takes a second value and is used to indicate that the first quantity does not exist.

In combination with the second aspect, in some embodiments, the channel information further includes a group identifier of the corresponding channel group, where group identifiers are in a one-to-one correspondence with channel identifiers in the one or more channel groups.

In combination with the second aspect, in some embodiments, the one-to-one correspondence between the group identifiers and the channel identifiers in the one or more channel groups is stored in an index table.

In combination with the second aspect, in some embodiments, the one-to-one correspondence between the group identifiers and the channel identifiers in the one or more channel groups is determined based on a quantity of channels in the one or more channel groups and the channel identifiers in the one or more channel groups.

In combination with the second aspect, in some embodiments, the channel information includes a second information field, where the second information field is used to indicate the group identifier of the corresponding channel group.

In combination with the second aspect, in some embodiments, a maximum quantity of bits of the second information field is determined based on a quantity of channels in the corresponding channel group.

In combination with the second aspect, in some embodiments, the channel information further comprises an energy parameter of the corresponding channel group, where the energy parameter is used to adjust an energy of the corresponding channel group.

In combination with the second aspect, in some embodiments, the energy parameter is determined based on a channel energy of the corresponding channel group and/or a quantization codebook, where the quantization codebook includes a correspondence between an identifier and an identifier value.

In combination with the second aspect, in some embodiments, the method further includes:

determining an adjustment factor based on the energy parameter;
upmixing channels in the corresponding channel group based on the adjustment factor.

In combination with the second aspect, in some embodiments, the first quantity is 0, or the first quantity is a first value, it is determined that the group identifier and the energy parameter do not exist; or,
the first quantity is greater than 0, or the first quantity is a second value, it is determined that the group identifier and the energy parameter exist.

In combination with the second aspect, in some embodiments, the one or more channel groups are the N first channel groups, or the one or more channel groups are the M second channel groups.

In a third aspect, the present disclosure provides an encoding and decoding method, where the method includes:

downmixing, by an encoder, channels in one or more channel groups to generate channel information for the one or more channel groups respectively, where the one or more channel groups includes N first channel groups and M second channel groups, the first channel groups each include three channels, the second channel groups each include two channels, N is 1, and M is a non-negative integer; and
decoding, by a decoder, channel information of one or more channel groups to obtain the channel information for the one or more channel groups respectively.

In a fourth aspect, the present disclosure provides an encoding and decoding apparatus, where the encoding and decoding apparatus includes at least one of a transceiver module and a processing module; where the encoder is configured to perform the optional implementations of the first aspect and the third aspect.

In a fifth aspect, the present disclosure provides an encoding and decoding apparatus, where the encoding and decoding apparatus includes at least one of a transceiver module and a processing module; where the access network device is configured to perform the optional implementations of the second aspect and the third aspect.

In a sixth aspect, the present disclosure provides an encoding and decoding apparatus, including:

one or more processors;
where the encoding and decoding apparatus is configured to perform the method according to any one of the first aspect and the third aspect.

In a seventh aspect, the present disclosure provides an encoding and decoding apparatus, including:

one or more processors;
where the encoding and decoding apparatus is configured to perform the method according to any one of the second aspect and the third aspect.

In an eighth aspect, the present disclosure provides a storage medium, where the storage medium stores first information, and when the first information is executed on a communication device, the communication device is caused to perform the method according to any one of the first aspect, the second aspect, and the third aspect.

In a ninth aspect, the present disclosure provides a program product, where when the program product is executed by a communication device, the communication device is caused to perform the method according to any one of the first aspect, the second aspect, and the third aspect.

In a tenth aspect, the present disclosure provides a computer program, where when the computer program is executed on a communication device, the communication device is caused to perform the method according to any one of the first aspect, the second aspect, and the third aspect.

In an eleventh aspect, the present disclosure provides a chip or a chip system. The chip or chip system includes a processing circuit configured to perform the method according to any one of the first aspect, the second aspect, and the third aspect.

It can be understood that the above encoder, storage medium, program product, computer program, chip or chip system are all used to perform the methods proposed in the embodiments of the present disclosure. Therefore, the beneficial effects that can be achieved can refer to the beneficial effects in the corresponding methods, which will not be repeated here.

The present disclosure provides an encoding and decoding method, an apparatus, and a storage medium. In some embodiments, terms such as encoding and decoding method, information encoding and decoding method, encoding and decoding method, etc. may be interchangeable, terms such as encoding and decoding apparatus, information processing apparatus, indication apparatus, etc. may be interchangeable, and terms such as information processing system, encoding and decoding system, etc. may be interchangeable.

The embodiments of the present disclosure are not exhaustive, but are merely illustrative of some embodiments, and are not intended to limit the scope of protection of the present disclosure. In the case of no contradiction, each step in a certain embodiment can be implemented as an independent embodiment, and the steps can be combined arbitrarily. For example, a solution after removing some steps in a certain embodiment can also be implemented as an independent embodiment, and the order of steps in a certain embodiment can be arbitrarily exchanged. In addition, optional implementations in a certain embodiment can be arbitrarily combined. Furthermore, the embodiments can be arbitrarily combined. For example, part or all of the steps of different embodiments can be arbitrarily combined, and a certain embodiment can be arbitrarily combined with optional implementations of other embodiments.

In the embodiments of the present disclosure, unless otherwise specified and there is a logical conflict, the terms and/or descriptions between the embodiments are consistent and can be referred to each other, and the technical features in different embodiments can be combined according to their inherent logical relationships to form new embodiments.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "said", "above", "the aforementioned", "this", etc., may mean "one and only one" or "one or more", "at least one", etc. For example, when articles such as "a", "an", "the" are used in translation, the noun after the article may be understood as a singular expression form or a plural expression form.

In the embodiments of the present disclosure, "multiple" means two or more.

In some embodiments, terms such as "at least one of", "one or more", "a plurality of", "multiple", etc. may be interchangeable.

In some embodiments, descriptions such as "at least one of A, B", "A and/or B", "in one case A, in another case B", "in response to case A, in response to another case B", etc., may include the following technical solutions according to the situation: in some embodiments A (A is performed regardless of B); in some embodiments B (B is performed regardless of A); in some embodiments selecting and performing from A and B (A and B are selectively performed); in some embodiments A and B (both A and B are performed). The same applies when there are more branches such as A, B, C.

In some embodiments, descriptions such as "A or B", etc., may include the following technical solutions according to the situation: in some embodiments A (A is performed regardless of B); in some embodiments B (B is performed regardless of A); in some embodiments selecting and performing from A and B (A and B are selectively performed). The same applies when there are more branches such as A, B, C.

Prefix words such as "first", "second", etc. in the embodiments of the present disclosure are only used to distinguish different description objects, and do not impose restrictions on the position, order, priority, quantity, or content of the description objects. The description of the description objects is referred to the claims or the description in the context of the embodiments, and should not be construed as undue limitations due to the use of prefix words. For example, if the description object is "field", then the ordinal numbers before "field" in "first field" and "second field" do not restrict the position or order between the "fields", and "first" and "second" do not restrict whether the "fields" they modify are in the same message, nor do they restrict the order of the "first field" and the "second field". For another example, if the description object is "level", then the ordinal numbers before "level" in "first level" and "second level" do not restrict the priority between the "levels". For another example, the number of description objects is not limited by the ordinal numbers, and may be one or more. Taking "first apparatus" as an example, the number of "apparatuses" may be one or more. In addition, objects modified by different prefix words may be the same or different. For example, if the description object is "apparatus", then "first apparatus" and "second apparatus" may be the same apparatus or different apparatuses, and their types may be the same or different. For another example, if the description object is "information", then "first information" and "second information" may be the same information or different information, and their content may be the same or different.

In some embodiments, "include A", "contain A", "used to indicate A", "carry A" may be interpreted as directly carrying A, or indirectly indicating A.

In some embodiments, terms such as "time/frequency", "time-frequency domain", etc. refer to the time domain and/or the frequency domain.

In some embodiments, terms such as "in response to...", "in response to determining...", "in the case of...", "when...", "if...", etc. may be interchangeable.

In some embodiments, terms such as "greater than", "greater than or equal to", "not less than", "more than", "more than or equal to", "not less than", "higher than", "higher than or equal to", "not lower than", "above", etc. may be interchangeable, and terms such as "less than", "less than or equal to", "not greater than", "fewer than", "fewer than or equal to", "not more than", "lower than", "lower than or equal to", "not higher than", "below", etc. may be interchangeable.

In some embodiments, apparatuses and devices may be interpreted as physical or virtual, and their names are not limited to those recorded in the embodiments. In some cases, they may also be understood as "equipment", "device", "circuit", "network element", "node", "function", "unit", "section", "system", "network", "chip", "chip system", "entity", "subject", etc.

In some embodiments, "network" may be interpreted as a device included in the network, for example, an access network device, a core network device, etc.

In some embodiments, "access network device (AN device)" may also be referred to as "radio access network device (RAN device)", "base station (BS)", "radio base station", "fixed station". In some embodiments, it may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "encoder (terminal)" or "encoder device (terminal device)" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, the acquisition of data, information, etc. may comply with the laws and regulations of the country where it is located.

In some embodiments, data, information, etc. may be acquired after obtaining user consent.

In addition, each element, each row, or each column in the tables of the embodiments of the present disclosure may be implemented as an independent embodiment, and any combination of elements, rows, and columns may also be implemented as an independent embodiment.

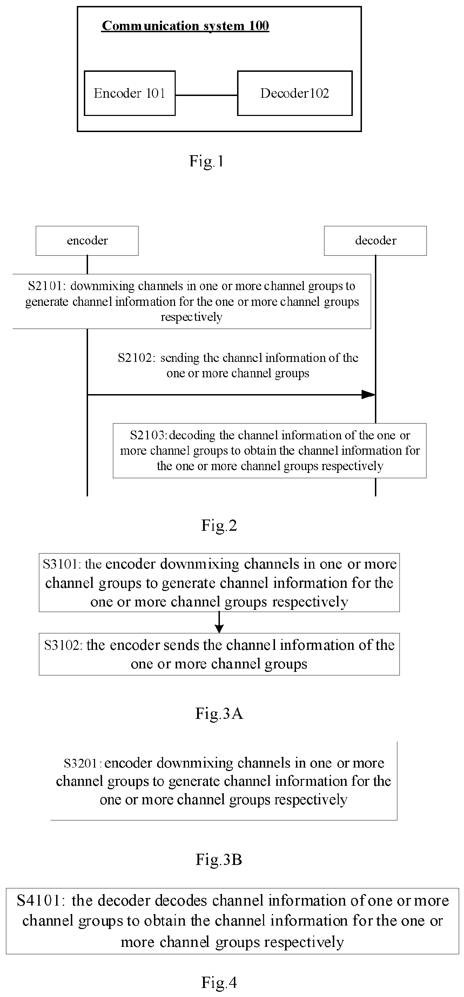

FIG. 1 is a schematic architectural diagram of an encoding and decoding system according to an embodiment of the present disclosure. As shown in FIG. 1, the method provided in the present disclosure may be applied to an encoding and decoding system 100, which may include an encoder 101 and a decoder 102. It should be noted that the encoding and decoding system 100 may also include other devices, and the present disclosure does not limit the devices included in the encoding and decoding system 100.

In some embodiments, both the encoder 101 and the decoder 102 are provided in a terminal. In some embodiments, the terminal may be various devices. For example, it includes at least one of a mobile phone, a wearable

device, an Internet of Things device, a car with communication capabilities, a smart car, a tablet computer (Pad), a computer with wireless transceiver capabilities, a virtual reality (VR) encoder device, an augmented reality (AR) encoder device, a wireless encoder device in industrial control, a wireless encoder device in self-driving, a wireless encoder device in remote medical surgery, a wireless encoder device in smart grid, a wireless encoder device in transportation safety, a wireless encoder device in smart city, a wireless encoder device in smart home, but is not limited thereto.

It can be understood that the encoding and decoding system described in the embodiments of the present disclosure is for the purpose of more clearly illustrating the technical solutions of the embodiments of the present disclosure, and does not constitute a limitation on the technical solutions proposed in the embodiments of the present disclosure. Those of ordinary skill in the art will know that with the evolution of the system architecture and the emergence of new business scenarios, the technical solutions proposed in the embodiments of the present disclosure are equally applicable to similar technical problems.

The following embodiments of the present disclosure may be applied to the encoding and decoding system 100 shown in FIG. 1, or some entities thereof, but are not limited thereto. The entities shown in FIG. 1 are illustrative, and the encoding and decoding system may include all or some of the entities in FIG. 1, or may include other entities not shown in FIG. 1. The number and form of each entity are arbitrary, and each entity may be physical or virtual. The connection relationships between the entities are illustrative, and the entities may be unconnected or connected, and the connection may be in any manner, direct or indirect, wired or wireless.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G New Radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), other systems using other encoding and decoding methods, next-generation systems based on extensions thereof, etc. In addition, multiple systems may also be combined (for example, LTE or LTE-A combined with 5G, etc.) for application.

In some embodiments, the present disclosure is used for three-dimensional audio encoding. Among them, three-dimensional audio encoding is one of the key technologies of immersive audio technology. Compared with traditional sound, three-dimensional sound adds spatial sense and orientation sense, allowing listeners to reproduce the sound heard in the real world, thereby meeting people's demand for high-fidelity, highly immersive sound experiences, while also providing personalized selection and interactive experiences.

In some embodiments, in order to reproduce the spatial sense and orientation sense of sound, the technology can rely on channel-based methods, object-based methods, sound field-based methods, and combinations of the above three forms. Among them: channel-based audio is a set of interrelated channels, common examples being 5.1 channels, 7.1 channels, 5.1.4 channels, 7.1.4 channels, etc. Each format corresponds to a speaker layout, and the best playback effect can be obtained under the corresponding speaker layout.

In some embodiments, object-based audio is a collection of a series of mono audio elements and corresponding metadata. The metadata represents information such as the position, intensity, and size of the object. During playback, the object is mapped to one or more speakers or rendered binaurally to headphones according to the metadata information to achieve the desired spatial audio effect.

In some embodiments, sound field-based audio is a 3D sound field modeling format defined on the surface of a sphere. The principle is that sound propagates as pressure waves. For a given time of a sound scene, each point needs to be represented by several pressure functions. If the pressure value of each point in the space is known, the sound in the space can be reconstructed. The pressure of each point in the space has a certain relationship with its neighboring points. In order to fully utilize the advantages of the scene-based audio production method, the coefficients need to be accurately obtained to improve the encoding quality of the sound field spatial coefficients. The collected sound field signal is called Higher Order Ambisonics (HOA). The performance of the HOA system increases with the order of HOA, but the number of HOA signals also increases accordingly.

FIG. 2 is a schematic interaction diagram of an encoding and decoding method according to an embodiment of the present disclosure. As shown in FIG. 2, the present disclosure relates to an encoding and decoding method, where the method includes:

Step S2101, an encoder downmixes channels in one or more channel groups to generate channel information for the one or more channel groups respectively.

In some embodiments, the one or more channel groups includes N first channel groups and M second channel groups, the first channel groups each include three channels, the second channel groups each include two channels, N is 1, and M is a non-negative integer.

In some embodiments, N may also be 0, that is, there is no channel group including three channels.

In some embodiments, the first channel group may be referred to as a three-channel group, a channel pair, or other channel group. In some embodiments, the second channel group may also be referred to as a two-channel group, a channel pair, or other channel group.

In some embodiments, the channel information is used to indicate information of one or more channel groups. Alternatively, it may also be understood that the channel information is used to indicate information of channels included in the channel group. Alternatively, it may also be understood that the channel information is used to indicate the composition of the channel group.

In some embodiments, the name of the channel information is not limited. For example, it may be side information, indication information, grouping information, etc.

In some embodiments, the channel information includes a first quantity of the one or more channel groups. In the embodiment of the present disclosure, the encoder may group multiple channels to obtain one or more channel groups, and may also report the number of the one or more channel groups, which number is the first quantity. Optionally, the first quantity is 1, 2, 3, or other values. For example, if the first quantity is 1, it may indicate that the one or more channel groups includes one first channel group and zero second channel groups. Alternatively, it includes zero first channel groups and one second channel group. For example, if the first quantity is 2, it may indicate that the one or more channel groups includes one first channel group and one second channel group. Alternatively, it includes zero first channel groups and two second channel groups.

In some embodiments, the channel information includes a first information field, where the first information field is used to indicate the first quantity of the one or more channel groups. In the embodiment of the present disclosure, the value indicated by the first information field is the first quantity of the one or more channel groups. Optionally, the first information field is a preset number of bits. For example, the preset number of bits is 4 bits, 5 bits, 6 bits, or other numbers of bits. For example, if the first information field is 4 bits, if the first information field is 0001, it indicates that the first quantity is 1, and if the first information field is 0010, it indicates that the first quantity is 2.

In some embodiments, the name of the first information field is not limited. For example, it may be bit information, bits, etc.

In some embodiments, the first information field takes a first value and is used to indicate that the first quantity exists. In the embodiment of the present disclosure, the first information field taking the first value is used to indicate that the first quantity exists, which may also be understood as the channel group including the first channel group. Alternatively, it may also be understood that the channel information further includes other information besides the first quantity. Optionally, the first information field is 1 bit, and if the bit is 1, it indicates the first value, which is used to indicate that the first quantity exists.

In some embodiments, the first information field takes a second value and is used to indicate that the first quantity does not exist. In the embodiment of the present disclosure, the first information field taking the second value is used to indicate that the first quantity does not exist, which may also be understood as the channel group not including the first channel group. Alternatively, it may also be understood that the channel information does not include the first quantity and other information besides the first quantity. Optionally, the first information field is 1 bit, and if the bit is 0, it indicates the second value, which is used to indicate that the first quantity does not exist.

In some embodiments, the first quantity may be represented by pairCnt (quantity of channel group pairs), or by other representations.

It should be noted that the channel group in the embodiment of the present disclosure may be the first channel group, or may be the second channel group.

In some embodiments, the channel information further includes a group identifier of the corresponding channel group, where group identifiers are in a one-to-one correspondence with channel identifiers in the one or more channel groups. In the embodiment of the present disclosure, the group identifier corresponds to the channel identifiers included in the channel group, so the channels included in the corresponding channel group can be determined according to the group identifier.

In some embodiments, the one-to-one correspondence between the group identifiers and the channel identifiers in the one or more channel groups is stored in an index table. Optionally, the index table includes channels corresponding to the group identifier.

In some embodiments, the channel group may be the first channel group, or may be the second channel group.

In some embodiments, for example, the one or more channel groups are the M second channel groups, and the channels include an L channel, an R channel, a C channel, an LS channel, and an RS channel. See Table 1 for the correspondence between group identifiers and channel identifiers.

Table 1

| | L | R | C | LS | RS |
|---|---|---|---|---|---|
| L | - | 0 | 1 | 2 | 3 |

(continued)

| | L | R | C | LS | RS |
|---|---|---|---|---|---|
| R | - | - | 4 | 5 | 6 |
| C | - | - | - | 7 | 8 |
| LS | - | - | - | - | 9 |
| RS | - | - | - | - | - |

In some embodiments, the group identifier may also be referred to as a channel index, an index of a channel pair, or other name.

In some embodiments, the one-to-one correspondence between the group identifiers and the channel identifiers in the one or more channel groups is determined based on a quantity of channels in the one or more channel groups and the channel identifiers in the one or more channel groups.

In the embodiment of the present disclosure, the correspondence is generated using an algorithm. An initial value of a three-channel index retrieval variable index is set to -1. If no matching index value is retrieved, the return value is the initial value of the three-channel index. Meanwhile, a traversal variable of ch0 is set to i, a traversal variable of ch1 is set to j, and a traversal variable of ch2 is set to k. The outermost traversal condition is the traversal of channel ch0, with a range of [0, coupleChNum]. The middle traversal condition is the traversal of channel ch1, with a range of [i+1, coupleChNum]. The innermost traversal condition is the traversal of channel ch2, with a range of [j+1, coupleChNum]. The index update method is: each time the innermost loop is entered, index is incremented by 1. The index matching determination is: after index is updated, it is determined whether the index matches, and the determination condition is ch0=i, ch1=j, ch2=k. If a matching index is found, the index is returned and the program terminates, where coupleChNum refers to the quantity of channels participating in grouping.

In some embodiments, the channel information includes a second information field, where the second information field is used to indicate the group identifier of the corresponding channel group. In the embodiment of the present disclosure, the value of the second information field is the group identifier of the channel group. Optionally, the first information field is a preset number of bits. For example, the preset number of bits is 4 bits, 5 bits, 6 bits, or other numbers of bits. For example, if the first information field is 6 bits, if the first information field is 000001, it indicates that the group identifier is 1, and if the first information field is 000010, it indicates that the group identifier is 2.

In some embodiments, a maximum quantity of bits of the second information field is determined based on a quantity of channels in the corresponding channel group. Optionally, the one or more channel groups are the N first channel groups, and the maximum quantity of bits of the second information field is floor(log2(coupleChNum * (coupleChNum-1) / 2 - 1)) + 1, where floor(.) means rounding down, and coupleChNum refers to the quantity of channels participating in grouping. Optionally, the one or more channel groups are the M second channel groups, and the maximum quantity of bits of the second information field is floor(log2(coupleChNum * (coupleChNum-1) * (coupleChNum-2)/ 6 - 1)) + 1.

In some embodiments, the channel information further comprises an energy parameter of the corresponding channel group, where the energy parameter is used to adjust an energy of the corresponding channel group. In the embodiment of the present disclosure, the energy parameter is used to adjust the energy/amplitude of the channels included in the channel group.

In some embodiments, the energy parameter is determined based on a channel energy of the corresponding channel group and/or a quantization codebook, where the quantization codebook includes a correspondence between an identifier and an identifier value. Optionally, the energy parameter is determined based on the channel energy of the channel group and the quantization codebook. Optionally, the energy parameter is determined based on the channel energy of the channel group.

In some embodiments, the quantization codebook may also be referred to as a correspondence between quantization identifiers and quantization values. For example, see Table 2, which shows the correspondence between quantization identifiers and quantization values.

Table 2

| Quantization identifier | Quantization value |
|---|---|
| 0 | 1.777777778 |
| 1 | 0.750000000 |
| 2 | 0.562500000 |
| 3 | 3.200000000 |

(continued)

| Quantization identifier | Quantization value |
|---|---|
| 4 | 5.333333333 |
| 5 | 0.812500000 |
| 6 | 1.066666667 |
| 7 | 4.000000000 |
| 8 | 0.187500000 |
| 9 | 1.142857143 |
| 10 | 0.437500000 |
| 11 | 1.454545455 |
| 12 | 0.125000000 |
| 13 | 0.625000000 |
| 14 | 2.285714286 |
| 15 | 0.500000000 |
| 16 | 16.00000000 |
| 17 | 2.000000000 |
| 18 | 0.875000000 |
| 19 | 0.250000000 |
| 20 | 1.333333333 |
| 21 | 0.375000000 |
| 22 | 1.600000000 |
| 23 | 8.000000000 |
| 24 | 0.687500000 |
| 25 | 0.062500000 |
| 26 | 1.230769231 |
| 27 | 0.312500000 |
| 28 | 0.937500000 |
| 29 | 2.666666667 |

In some embodiments, respectively channel energies of channels in the corresponding channel group is obtained, an average channel energy is determined based on the obtained channel energies of the channels, an adjustment factor for each channel in the channel group is determined based on the channel energy of each channel and the average channel energy, and the energy parameter is determined based on a quantized parameter obtained by quantizing the adjustment factor.

Optionally, determining the energy parameter based on the quantized parameter obtained by quantizing the adjustment factor includes: quantizing the adjustment factor to obtain a quantized adjustment factor, and then determining the energy parameter using a distance algorithm based on the quantized adjustment factor and the quantization codebook.

Optionally, the distance algorithm includes a minimum mean square distance algorithm, a Euclidean distance algorithm, or other distance algorithms, which are not limited in the embodiments of the present disclosure.

Optionally, if the one or more channel groups are the M second channel groups. Then the channel energy and the average energy (energy_mean) of the i-th channel are calculated. where i is 0 and 1.

$$\mathrm{Energy[i]} = \mathrm{sqrt}(\sum_{j=start}^{j=end} \mathrm{mdctSpectrum[i][j]} \ * \ \mathrm{mdctSpectrum[i][j]}),$$

where sqrt is the square root, and mdctSpectrum is the spectral coefficient of the current frame.

$$\text{Energy_mean} = 0.5 * (\text{Energy}[0] + \text{Energy}[1]).$$

Here, j represents the frequency bin of the current frame, and the frequency bin range is [start, end].

Next, factor[i] is calculated, which is the amplitude adjustment factor corresponding to the ILD (Interaural time difference) parameter of the i-th channel: factor[i] = Energy[i] / Energy_mean;

Finally, the quantization index corresponding to the ILD parameter of the i-th channel, mcIld[i], is obtained using the minimum mean square distance algorithm through mcIldCodebook and factor[i], and mcIldCodebook is the quantization codebook of the ILD parameter.

It should be noted that factor[i] can also be used to adjust MDCT (Modified Discrete Cosine Transform) coefficients. The channel after adjusting the MDCT coefficients then undergoes 3-channel downmixing. The formula for adjusting the MDCT coefficients is as follows:

$$\text{mdctSpectrum}[i] = \text{mdctSpectrum}[i] / \text{factor}[i].$$

In some embodiments, the one or more channel groups are the N first channel groups. The channel energy of the i-th channel and the channel average energy energy_mean are calculated. where $\text{Energy}[i] = \text{sqrt}(\sum_{j=start}^{j=end} \text{mdctSpectrum}[i][j] * \text{mdctSpectrum}[i][j])$, and Energy_mean = avg (Energy[0] + Energy[1] + Energy[2]). Here, j represents the frequency bin of the current frame, and the frequency bin range is [start, end].

Next, factor[i] is calculated, which is the amplitude adjustment factor corresponding to the ILD parameter of the i-th channel: factor[i] = Energy[i] / Energy_mean.

Finally, the quantization index mcIld_3MS[i] corresponding to the ILD parameter of the i-th channel is obtained using the minimum mean square distance algorithm through mcIldCodebook and factor[i], and mcIldCodebook is the quantization codebook of the ILD parameter.

Optionally, determining the energy parameter based on the quantized parameter obtained by quantizing the adjustment factor includes: quantizing the adjustment factor to obtain a quantized adjustment factor, and determining the quantized adjustment factor as the energy parameter.

In some embodiments, the first quantity is 0, or the first quantity is a first value, determining that the group identifier and the energy parameter do not exist.

In some embodiments, the first quantity is greater than 0, or the first quantity is a second value, determining that the group identifier and the energy parameter exist.

It should be noted that the energy parameter in the embodiment of the present disclosure may also be referred to as an amplitude parameter, where the square of the amplitude parameter is the energy parameter.

Step S2102, the encoder sends the channel information of the one or more channel groups.

In some embodiments, the decoder receives the channel information of the one or more channel groups.

In some embodiments, the encoder sends the channel information of the one or more channel groups to the decoder. The decoder receives the channel information of the one or more channel groups sent by the encoder.

Step S2103, the decoder decodes the channel information of the one or more channel groups to obtain the channel information for the one or more channel groups respectively.

In some embodiments, the one or more channel groups includes N first channel groups and M second channel groups, the first channel groups each include three channels, the second channel groups each include two channels, N is 1, and M is a non-negative integer.

In some embodiments, if the decoder decodes from the channel information and determines that the first quantity of channel groups included in the channel groups is greater than 0, it continues to decode to obtain the group identifier of the channel group and the energy parameter of the channel group included in the channel information.

In some embodiments, if the decoder decodes from the channel information and determines that the first quantity of channel groups included in the channel groups is 0, it does not continue to decode to obtain the group identifier of the channel group and the energy parameter of the channel group included in the channel information.

In some embodiments, terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", "chip", etc. may be interchangeable.

In some embodiments, terms such as "uplink", "uplink link", "physical uplink link", etc. may be interchangeable,

terms such as "downlink", "downlink link", "physical downlink link", etc. may be interchangeable, and terms such as "side", "sidelink", "sidelink communication", "sidelink link communication", "direct connection", "direct connection link", "direct connection communication", "direct connection link communication", etc. may be interchangeable.

In some embodiments, terms such as "acquire", "obtain", "get", "receive", "transmit", "bidirectional transmission", "send and/or receive" may be interchangeable, and they may be interpreted as receiving from other entities, obtaining from a protocol, obtaining from a higher layer, obtaining through own processing, implementing autonomously, etc.

In some embodiments, terms such as "send", "transmit", "report", "deliver", "transmission", "bidirectional transmission", "send and/or receive", etc. may be interchangeable.

In some embodiments, terms such as "moment", "time point", "time", "time position", etc. may be interchangeable, and terms such as "duration", "time period", "time window", "window", "time", etc. may be interchangeable.

In some embodiments, terms such as "certain", "preset", "predetermined", "set", "indicated", "a certain", "arbitrary", "first", etc. may be interchangeable. "Certain A", "preset A", "predetermined A", "set A", "indicated A", "a certain A", "arbitrary A", "first A" may be interpreted as A predetermined in a protocol, etc., or may be interpreted as A obtained through setting, configuration, or indication, etc., or may be interpreted as a certain A, an arbitrary A, or a first A, etc., but is not limited thereto.

The encoding and decoding method involved in the embodiments of the present disclosure may include at least one of steps S2101 to S2106. For example, step S2101 may be implemented as an independent embodiment, step S2102 may be implemented as an independent embodiment, step S2103 may be implemented as an independent embodiment, step S2104 may be implemented as an independent embodiment, step S2105 may be implemented as an independent embodiment, step S2106 may be implemented as an independent embodiment, steps S2101 and S2102 may be implemented as an independent embodiment, steps S2103 and S2104 may be implemented as an independent embodiment, steps S2105 and S2106 may be implemented as an independent embodiment, steps S2101, S2102, S2103, and S2104 may be implemented as an independent embodiment, steps S2101, S2102, S2105, and S2106 may be implemented as an independent embodiment, steps S2103, S2104, S2105, and S2106 may be implemented as an independent embodiment, but is not limited thereto.

In some embodiments, step S2101 is optional, and one or more of these steps may be omitted or replaced in different embodiments.

In some embodiments, step S2102 is optional, and one or more of these steps may be omitted or replaced in different embodiments.

In some embodiments, step S2103 is optional, and one or more of these steps may be omitted or replaced in different embodiments.

In some embodiments, step S2104 is optional, and one or more of these steps may be omitted or replaced in different embodiments.

In some embodiments, step S2105 is optional, and one or more of these steps may be omitted or replaced in different embodiments.

In some embodiments, step S2106 is optional, and one or more of these steps may be omitted or replaced in different embodiments.

In some embodiments, steps S2101 and S2102 are optional, and one or more of these steps may be omitted or replaced in different embodiments.

In some embodiments, steps S2103 and S2104 are optional, and one or more of these steps may be omitted or replaced in different embodiments.

In some embodiments, steps S215 and S2106 are optional, and one or more of these steps may be omitted or replaced in different embodiments.

In some embodiments, reference may be made to other optional implementations described before or after the description corresponding to FIG. 2.

FIG. 3A is a schematic flowchart of an encoding and decoding method according to an embodiment of the present disclosure, applied to an encoder. As shown in FIG. 3A, the present disclosure relates to an encoding and decoding method, where the method includes:

Step S3101, an encoder downmixes channels in one or more channel groups to generate channel information for the one or more channel groups respectively.

For optional implementations of step S3101, reference may be made to the optional implementations of step S2101 in FIG. 2 and other associated parts in the embodiment related to FIG. 2, which will not be repeated here.

Step S3102, the encoder sends the channel information of the one or more channel groups.

For optional implementations of step S3102, reference may be made to the optional implementations of step S2102 in FIG. 2 and other associated parts in the embodiment related to FIG. 2, which will not be repeated here.

The encoding and decoding method involved in the embodiments of the present disclosure may include at least one of steps S3101 to S3102. For example, step S3101 may be implemented as an independent embodiment, step S3102 may be implemented as an independent embodiment, or at least two steps may be combined, but is not limited thereto.

In some embodiments, step S3101 is optional, and step S3102 is optional. In different embodiments, one or more of these steps may be omitted or replaced, but is not limited thereto.

FIG. 3B is a schematic flowchart of an encoding and decoding method according to an embodiment of the present disclosure, applied to an encoder. As shown in FIG. 3B, the present disclosure relates to an encoding and decoding method, where the method includes:

Step S3201, an encoder downmixes channels in one or more channel groups to generate channel information for the one or more channel groups respectively.

For optional implementations of step S3201, reference may be made to step S2101 in FIG. 2, step S3101 in FIG. 3A, and other associated parts in the embodiments related to FIG. 2 and FIG. 3A, which will not be repeated here.

FIG. 4 is a schematic flowchart of an encoding and decoding method according to an embodiment of the present disclosure, applied to a decoder. As shown in FIG. 4, the present disclosure relates to an encoding and decoding method, where the method includes:

Step S4101, a decoder decodes channel information of one or more channel groups to obtain the channel information for the one or more channel groups respectively.

For optional implementations of step S4101, reference may be made to step S2103 in FIG. 2 and other associated parts in the embodiment related to FIG. 2, which will not be repeated here.

In some embodiments, the channel information of the one or more channel groups is decoded to obtain the channel information for the one or more channel groups respectively, where the one or more channel groups includes N first channel groups and M second channel groups, the first channel groups each include three channels, the second channel groups each include two channels, N is 1, and M is a non-negative integer.

In some embodiments, the channel information includes a first quantity of the one or more channel groups.

In some embodiments, the channel information includes a first information field, where the first information field is used to indicate the first quantity of the one or more channel groups.

In some embodiments, the first information field takes a first value and is used to indicate that the first quantity exists, or,

the first information field takes a second value and is used to indicate that the first quantity does not exist.

In some embodiments, the channel information further includes a group identifier of the corresponding channel group, where group identifiers are in a one-to-one correspondence with channel identifiers in the one or more channel groups.

In some embodiments, the one-to-one correspondence between the group identifiers and the channel identifiers in the one or more channel groups is stored in an index table.

In some embodiments, the one-to-one correspondence between the group identifiers and the channel identifiers in the one or more channel groups is determined based on a quantity of channels in the one or more channel groups and the channel identifiers in the one or more channel groups.

In some embodiments, the channel information includes a second information field, where the second information field is used to indicate the group identifier of the corresponding channel group.

In some embodiments, a maximum quantity of bits of the second information field is determined based on a quantity of channels in the corresponding channel group.

In some embodiments, the channel information further comprises an energy parameter of the corresponding channel group, where the energy parameter is used to adjust an energy of the corresponding channel group.

In some embodiments, the energy parameter is determined based on a channel energy of the corresponding channel group and/or a quantization codebook, where the quantization codebook includes a correspondence between an identifier and an identifier value.

In some embodiments, the method further includes:

determining an adjustment factor based on the energy parameter;
upmixing channels in the channel group based on the adjustment factor.

In some embodiments, the first quantity is 0, or the first quantity is a first value, determining that the group identifier and the energy parameter do not exist; or,
the first quantity is greater than 0, or the first quantity is a second value, determining that the group identifier and the energy parameter exist.

In some embodiments, the one or more channel groups are the N first channel groups, or the one or more channel groups are the M second channel groups.

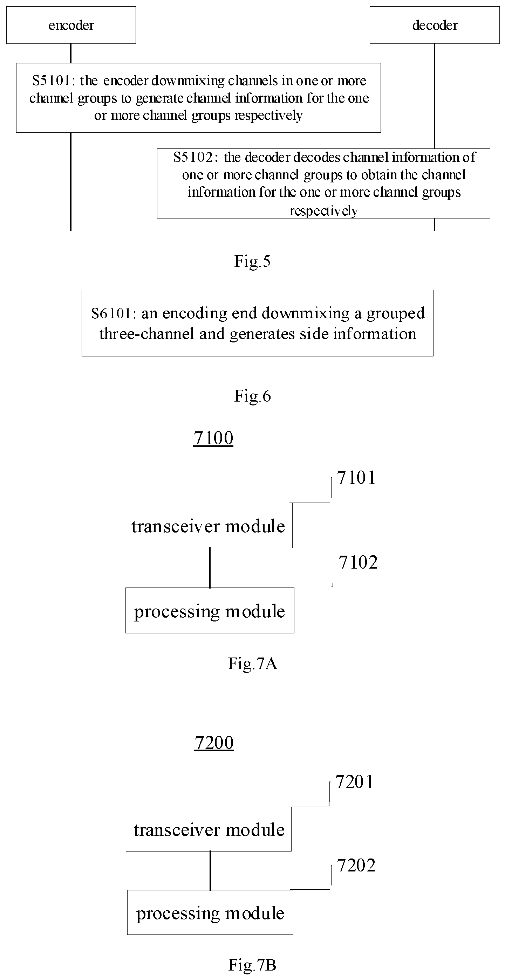

FIG. 5 is a schematic flowchart of an encoding and decoding method according to an embodiment of the present disclosure. As shown in FIG. 5, the present disclosure relates to an encoding and decoding method, where the method includes:

Step S5101: an encoder downmixes channels in one or more channel groups to generate channel information for

the one or more channel groups respectively.

In some embodiments, the one or more channel groups includes N first channel groups, the first channel groups each include three channels, and the one or more channel groups includes M second channel groups, the second channel groups each include two channels, where N is 1, and M is a non-negative integer.

Step S5102: a decoder decodes channel information of one or more channel groups to obtain the channel information for the one or more channel groups respectively.

For optional implementations of step S5101, reference may be made to step S2101 in FIG. 2, step S3101 in FIG. 3A, and other associated parts in the embodiments related to FIG. 2 and FIG. 4, which will not be repeated here.

For optional implementations of step S5102, reference may be made to step S2103 in FIG. 2, step S4101 in FIG. 4, and other associated parts in the embodiments related to FIG. 2 and FIG. 3A, which will not be repeated here.

In some embodiments, the above method may include the methods of the above embodiments on the encoding and decoding system side, the encoder side, the decoder side, etc., which will not be repeated here.

FIG. 6 is a schematic flowchart of an encoding and decoding method according to an embodiment of the present disclosure. As shown in FIG. 6, the present disclosure relates to an encoding and decoding method, where the method includes:

Step S6101, an encoding end downmixes a grouped three-channel and generates side information.

The side information includes N pieces of first side information, and the first side information is side information generated by three-channel grouping and downmixing, where N is a non-negative integer.

In some embodiments, a 1-bit control word may be used to identify the existence state of the first side information. A specific example of a value is given below and is not unique. 0: first side information exists; 1: first side information does not exist.

In some embodiments, the number of three-channel groups may be used to identify the existence state of the first side information. When the number of three-channel groups is greater than 0, other first side information is transmitted. When the number of three-channel groups is equal to 0, no other first side information is transmitted.

In some embodiments, an index value channelPairIndex_3MS of the three-channel group is used in the first side information to represent the three channels ch0, ch1, ch2 of the three-channel group. There is a one-to-one mapping relationship between channelPairIndex_3MS and ch0, ch1, ch2. channelPairIndex_3MS is transmitted in the encoded bitstream, and the encoding end maps the three channels ch0, ch1, ch2 of the three-channel group to channelPairIndex_3MS. The decoding end parses channelPairIndex_3MS from the bitstream and uses the same mapping relationship to convert it into the three channels ch0, ch1, ch2 of the three-channel group.

In some embodiments, channelPairIndex_3MS may be obtained by looking up a table, and each coupleChNum corresponds to an index table of a three-dimensional array.

In some embodiments, channelPairIndex_3MS may be obtained using an algorithm generation method. The input parameters of the encoding end program include coupleChNum, ch0, ch1, ch2, and the output parameter or return value is channelPairIndex_3MS. The input parameters of the decoding end program include coupleChNum and channelPairIndex_3MS.

In some embodiments, the steps at the encoding end:

Step 1: Initialization: Set the initial value of the three-channel index retrieval variable index to -1. If no matching index value is retrieved, the return value is the initial value of the three-channel index. At the same time, set the traversal variable of ch0 to i, the traversal variable of ch1 to j, and the traversal variable of ch2 to k.
Step 2: The outermost traversal condition is the traversal of channel ch0, with a range of [0, coupleChNum].
Step 3: The middle traversal condition is the traversal of channel ch1, with a range of [i+1, coupleChNum].
Step 4: The innermost traversal condition is the traversal of channel ch2, with a range of [j+1, coupleChNum].
Step 5: Index update method: each time the innermost loop is entered, index is incremented by 1.
Step 6: Index matching determination: after index is updated, it is determined whether the index matches, and the determination condition is ch0=i, ch1=j, ch2=k. If a matching index is found, the index is returned and the program terminates.

In some embodiments, the maximum number of bits of the three-channel group index value channelPairIndex_3MS used in the first side information can be determined during initialization of the encoder and decoder. The calculation method is as follows:

channelPairIndex_3MS = floor(log2(coupleChNum * (coupleChNum-1) * (coupleChNum-2)/ 6 - 1)) + 1

coupleChNum: the number of all channels participating in grouping, excluding LFE channels.

In some embodiments, the three-channel inter-channel level difference ILD parameter quantization index is transmitted in the first side information. One three-channel inter-channel level difference ILD parameter quantization index

is transmitted for each channel participating in the three-channel pairing. Each channel inter-channel level difference ILD parameter quantization index corresponds to an amplitude adjustment factor, and the amplitude adjustment factor is used to represent an approximate value of the ratio between the channel energy/amplitude and the three-channel average energy/amplitude.

Step 1: Initializing the quantization codebook of the ILD parameter.

Step 2: Calculating the channel energies of the three paired channels and the channel average energy.

Step 3: Calculating the amplitude adjustment factors corresponding to the ILD parameters of the three channels.

Step 4: Using the minimum mean square distance algorithm to obtain the quantization index corresponding to the ILD parameter of the i-th channel through the quantization codebook of the ILD parameter and the amplitude adjustment factor corresponding to the ILD parameter.

Step 5: Using the amplitude adjustment factor corresponding to the ILD parameter of the i-th channel to adjust the MDCT coefficients. The channel after adjusting the MDCT coefficients then undergoes three-channel downmixing.

In the embodiment of the present disclosure, some or all of the steps, and their optional implementations, may be arbitrarily combined with some or all of the steps in other embodiments, and may also be arbitrarily combined with optional implementations of other embodiments.

The present disclosure also provides an apparatus for implementing any of the above methods. For example, an apparatus is provided, where the apparatus includes units or modules for implementing the steps performed by the encoder in any of the above methods. For another example, another apparatus is provided, including units or modules for implementing the steps performed by the decoder in any of the above methods.

It should be understood that the division of units or modules in the above apparatus is only a logical function division, and in actual implementation, they may be fully or partially integrated into one physical entity, or physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or to implement the functions of the units or modules of the above apparatus. The processor is, for example, a general-purpose processor, such as a central processing unit (CPU) or a microprocessor, and the memory is a memory within the apparatus or a memory outside the apparatus. Alternatively, the units or modules in the apparatus may be implemented in the form of hardware circuits. Some or all of the functions of the units or modules may be implemented by designing the hardware circuit. The above hardware circuit may be understood as one or more processors. For example, in one implementation, the above hardware circuit is an application-specific integrated circuit (ASIC), which implements some or all of the functions of the above units or modules by designing the logical relationships of the circuit elements. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured by a configuration file, thereby implementing some or all of the functions of the above units or modules. All units or modules of the above apparatus may be implemented entirely in the form of a processor calling software, or entirely in the form of hardware circuits, or partially in the form of a processor calling software, and the remaining part in the form of hardware circuits.

In the embodiment of the present disclosure, the processor is a circuit with signal processing capabilities. In one implementation, the processor may be a circuit with instruction reading and execution capabilities, such as a central processing unit (CPU), a microprocessor, a graphics processing unit (GPU) (which can be understood as a microprocessor), or a digital signal processor (DSP). In another implementation, the processor may implement certain functions through the logical relationships of a hardware circuit. The logical relationships of the hardware circuit are fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement the configuration of the hardware circuit can be understood as the process of the processor loading instructions to implement some or all of the functions of the above units or modules. In addition, it may also be a hardware circuit designed for artificial intelligence, which can be understood as an ASIC, such as a neural network processing unit (NPU), a tensor processing unit (TPU), a deep learning processing unit (DPU), etc.

FIG. 7A is a schematic structural diagram of an encoding and decoding apparatus according to an embodiment of the present disclosure. As shown in FIG. 7A, an encoding and decoding apparatus 7100 may include: at least one of a transceiver module 7101, a processing module 7102, etc. In some embodiments, the processing module 7102 is configured to group multiple channels to obtain one or more channel groups, where the one or more channel groups includes N first channel groups, the first channel groups each include three channels, and the one or more channel groups includes M second channel groups, the second channel groups each include two channels, where N is 1, and M is a non-negative integer. Optionally, the above transceiver module 7101 is configured to perform at least one of the communication steps such as sending and/or receiving performed by the encoder in any of the above methods (for example, step S2101 but not limited thereto), which will not be repeated here. Optionally, the above processing module is configured to perform at least one of the other steps performed by the encoder in any of the above methods, which will not be repeated here.

Optionally, the processing module 7102 is configured to perform at least one of the processing and other communication steps performed by the encoder in any of the above methods, which will not be repeated here.

FIG. 7B is a schematic structural diagram of an encoding and decoding apparatus according to an embodiment of the present disclosure. As shown in FIG. 7B, an encoding and decoding apparatus 7200 may include: at least one of a transceiver module 7201, a processing module 7202, etc. In some embodiments, the processing module 7202 is configured to decode first information to obtain channel information of one or more channel groups, where the one or more channel groups includes N first channel groups, the first channel groups each include three channels, and the one or more channel groups includes M second channel groups, the second channel groups each include two channels, where N is 1, and M is a non-negative integer. Optionally, the above transceiver module is configured to perform at least one of the communication steps such as sending and/or receiving performed by the decoder in any of the above methods (for example, step S2102 but not limited thereto), which will not be repeated here.

Optionally, the processing module 7202 is configured to perform at least one of the processing and other communication steps performed by the decoder in any of the above methods, which will not be repeated here.

In some embodiments, the transceiver module may include a sending module and/or a receiving module, and the sending module and the receiving module may be separate or integrated together. Optionally, the transceiver module may be interchangeable with a transceiver.

In some embodiments, the processing module may be one module or may include multiple sub-modules. Optionally, the multiple sub-modules respectively perform all or part of the steps required to be performed by the processing module. Optionally, the processing module may be interchangeable with a processor.

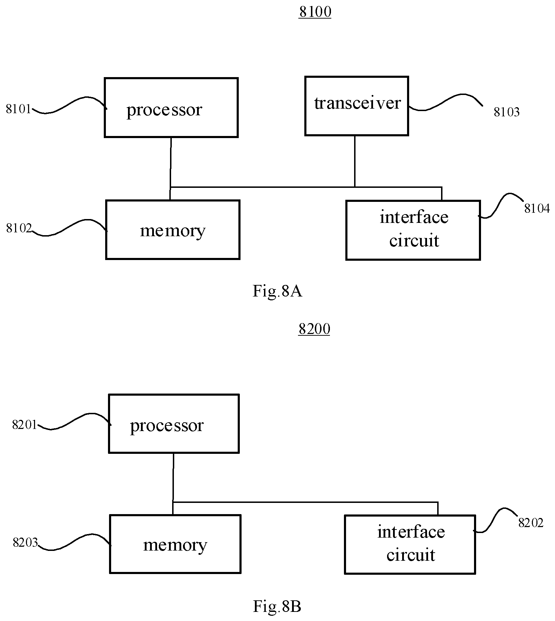

FIG. 8A is a schematic structural diagram of a communication device 8100 according to an embodiment of the present disclosure. The communication device 8100 may be a decoder (for example, an access network device, a core network device, etc.), or an encoder (for example, a user equipment, etc.), or a chip, chip system, or processor that supports the decoder to implement any of the above methods, or a chip, chip system, or processor that supports the encoder to implement any of the above methods. The communication device 8100 may be used to implement the methods described in the above method embodiments, and for details, reference may be made to the description in the above method embodiments.

As shown in FIG. 8A, the communication device 8100 includes one or more processors 8101. The processor 8101 may be a general-purpose processor or a special-purpose processor, for example, may be a baseband processor or a central processing unit. The baseband processor may be used to process communication protocols and communication data, and the central processing unit may be used to control the encoding and decoding apparatus (e.g., a base station, a baseband chip, an encoder device, an encoder device chip, a DU or a CU, etc.), execute programs, and process data of the programs. The communication device 8100 is configured to perform any of the above methods.

In some embodiments, the communication device 8100 further includes one or more memories 8102 for storing instructions. Optionally, all or part of the memory 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above methods (for example, step S2101, step S2102, step S2103, step S2104, but not limited thereto).

In some embodiments, the transceiver may include a receiver and/or a transmitter, and the receiver and the transmitter may be separate or integrated together. Optionally, terms such as transceiver, transceiver unit, transceiver machine, transceiver circuit, etc. may be interchangeable, terms such as transmitter, transmitting unit, transmitter machine, transmitter circuit, etc. may be interchangeable, and terms such as receiver, receiving unit, receiver machine, receiver circuit, etc. may be interchangeable.

In some embodiments, the communication device 8100 may include one or more interface circuits 8104. Optionally, the interface circuit 8104 is connected to the memory 8102, and the interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 in the description of the above embodiments may be a decoder or an encoder, but the scope of the communication device 8100 described in the present disclosure is not limited thereto, and the structure of the communication device 8100 may not be limited by FIG. 8A. The communication device may be an independent device or may be part of a larger device. For example, the communication device may be: (1) an independent integrated circuit IC, or a chip, or a chip system or subsystem; (2) a set of one or more ICs, optionally, the set of ICs may also include a storage component for storing data and programs; (3) an ASIC, such as a modem (Modem); (4) a module that can be embedded in other devices; (5) a receiver, an encoder device, an intelligent encoder device, a cellular phone, a wireless device, a handset, a mobile unit, a vehicle-mounted device, a decoder, a cloud device, an artificial intelligence device, etc.; (6) others, etc.

FIG. 8B is a schematic structural diagram of a chip 8200 according to an embodiment of the present disclosure.

For the case where the communication device 8100 may be a chip or a chip system, reference may be made to the schematic structural diagram of the chip 8200 shown in FIG. 8B, but not limited thereto.

The chip 8200 includes one or more processors 8201, and the chip 8200 is configured to perform any of the above methods.

In some embodiments, the chip 8200 further includes one or more interface circuits 8202. Optionally, the interface circuit 8202 is connected to a memory 8203, and the interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving in the above methods, and the processor 8201 performs at least one of the other steps.

In some embodiments, terms such as interface circuit, interface, transceiver pin, transceiver, etc. may be interchangeable.

In some embodiments, the chip 8200 further includes one or more memories 8203 for storing instructions. Optionally, all or part of the memory 8203 may be located outside the chip 8200.

The present disclosure also provides a storage medium, where instructions are stored on the storage medium, and when the instructions are executed on the communication device 8100, the communication device 8100 is caused to perform any of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure also provides a program product, where when the program product is executed by the communication device 8100, the communication device 8100 is caused to perform any of the above methods. Optionally, the program product is a computer program product.

The present disclosure also provides a computer program, where when the computer program is executed on a computer, the computer is caused to perform any of the above methods.

## Claims

**1.** An encoding and decoding method, performed by an encoder, comprising:

downmixing channels in one or more channel groups to generate channel information for the one or more channel groups respectively,

wherein the one or more channel groups comprise N first channel groups and M second channel groups, the N first channel groups each comprise three channels, the M second channel groups each comprise two channels, N is 1, and M is a non-negative integer.

**2.** The method according to claim 1, wherein the channel information comprises a first quantity of the one or more channel groups.

**3.** The method according to claim 2, wherein the channel information comprises a first information field, and the first information field is used to indicate the first quantity of the one or more channel groups.

**4.** The method according to claim 3, wherein the first information field takes a first value and is used to indicate that the first quantity exists, or the first information field takes a second value and is used to indicate that the first quantity does not exist.

**5.** The method according to any one of claims 1 to 4, wherein the channel information further comprises a group identifier of the corresponding channel group, and group identifiers are in a one-to-one correspondence with channel identifiers in the one or more channel groups.

**6.** The method according to claim 5, wherein the one-to-one correspondence between the group identifiers and the channel identifiers in the one or more channel groups is stored in an index table.

**7.** The method according to claim 5, wherein the one-to-one correspondence between the group identifiers and the channel identifiers in the one or more channel groups is determined based on a quantity of channels in the one or more channel groups and the channel identifiers in the one or more channel groups.

**8.** The method according to any one of claims 5 to 7, wherein the channel information comprises a second information field, and the second information field is used to indicate the group identifier of the corresponding channel group.

**9.** The method according to claim 8, wherein a maximum quantity of bits of the second information field is determined based on a quantity of channels in the corresponding channel group.

**10.** The method according to any one of claims 1 to 9, wherein the channel information further comprises an energy parameter of the corresponding channel group, and the energy parameter is used to adjust an energy of the corresponding channel group.

**11.** The method according to claim 10, wherein the energy parameter is determined based on a channel energy of the corresponding channel group and/or a quantization codebook, and the quantization codebook comprises a correspondence between an identifier and an identifier value.

**12.** The method according to claim 11, further comprising:

obtaining respectively channel energies of channels in the corresponding channel group;
determining an average channel energy based on the channel energies of the channels obtained;
determining respectively adjustment factors for the channels in the corresponding channel group based on the channel energies of the channels and the average channel energy; and
determining the energy parameter based on quantized parameters obtained by quantizing the adjustment factors.

**13.** The method according to any one of claims 2 to 12, further comprising:

determining that the group identifier and the energy parameter do not exist in a case where the first quantity is 0 or the first quantity is a first value; or
determining that the group identifier and the energy parameter exist in a case where the first quantity is greater than 0 or the first quantity is a second value.

**14.** The method according to any one of claims 2 to 13, wherein the one or more channel groups are the N first channel groups, or the one or more channel groups are the M second channel groups.

**15.** An encoding and decoding method, performed by a decoder, comprising:

decoding channel information of one or more channel groups to obtain the channel information for the one or more channel groups respectively,
wherein the one or more channel groups comprise N first channel groups and M second channel groups, the N first channel groups each comprise three channels, the M second channel groups each comprise two channels, N is 1, and M is a non-negative integer.

**16.** The method according to claim 15, wherein the channel information comprises a first quantity of the one or more channel groups.

**17.** The method according to claim 16, wherein the channel information comprises a first information field, and the first information field is used to indicate the first quantity of the one or more channel groups.

**18.** The method according to claim 17, wherein the first information field takes a first value and is used to indicate that the first quantity exists, or the first information field takes a second value and is used to indicate that the first quantity does not exist.

**19.** The method according to any one of claims 15 to 18, wherein the channel information further comprises a group identifier of the corresponding channel group, and group identifiers are in a one-to-one correspondence with channel identifiers in the one or more channel groups.

**20.** The method according to claim 19, wherein the one-to-one correspondence between the group identifiers and the channel identifiers in the one or more channel groups is stored in an index table.

**21.** The method according to claim 19, wherein the one-to-one correspondence between the group identifiers and the channel identifiers in the one or more channel groups is determined based on a quantity of channels in the one or more channel groups and the channel identifiers in the one or more channel groups.

**22.** The method according to any one of claims 19 to 21, wherein the channel information comprises a second information field, and the second information field is used to indicate the group identifier of the corresponding channel group.

**23.** The method according to claim 22, wherein a maximum quantity of bits of the second information field is determined based on a quantity of channels in the corresponding channel group.

**24.** The method according to any one of claims 15 to 23, wherein the channel information further comprises an energy parameter of the corresponding channel group, and the energy parameter is used to adjust an energy of the corresponding channel group.

**25.** The method according to claim 24, wherein the energy parameter is determined based on a channel energy of the corresponding channel group and/or a quantization codebook, and the quantization codebook comprises a correspondence between an identifier and an identifier value.

**26.** The method according to claim 25, further comprising:

determining adjustment factors based on the energy parameter; and
upmixing channels in the corresponding channel group based on the adjustment factors.

**27.** The method according to any one of claims 16 to 26, further comprising:

determining that the group identifier and the energy parameter do not exist in a case where the first quantity is 0 or the first quantity is a first value; or
determining that the group identifier and the energy parameter exist in a case where the first quantity is greater than 0 or the first quantity is a second value.

**28.** The method according to any one of claims 16 to 27, wherein the one or more channel groups are the N first channel groups, or the one or more channel groups are the M second channel groups.

**29.** An encoding and decoding method, comprising:

downmixing, by an encoder, channels in one or more channel groups to generate channel information for the one or more channel groups respectively, wherein the one or more channel groups comprise N first channel groups and M second channel groups, the N first channel groups each comprise three channels, the M second channel groups each comprise two channels, N is 1, and M is a non-negative integer; and
decoding, by a decoder, the channel information of the one or more channel groups to obtain the channel information for the one or more channel groups respectively.

**30.** An encoding and decoding apparatus, comprising:

a processing module configured to downmix channels in one or more channel groups to generate channel information for the one or more channel groups respectively,
wherein the one or more channel groups comprise N first channel groups and M second channel groups, the N first channel groups each comprise three channels, the M second channel groups each comprise two channels, N is 1, and M is a non-negative integer.

**31.** A encoding and decoding apparatus, comprising:

a processing module configured to decode channel information of one or more channel groups to obtain the channel information for the one or more channel group respectively,
wherein the one or more channel groups comprise N first channel groups and M second channel groups, the N first channel groups each comprise three channels, the M second channel groups each comprise two channels, N is 1, and M is a non-negative integer.

**32.** An encoding and decoding apparatus, comprising:

one or more processors;
wherein the one or more processors are configured to perform the encoding and decoding method according to any one of claims 1 to 14.

**33.** A encoding and decoding apparatus, comprising:

one or more processors;
wherein the one or more processors are configured to perform the encoding and decoding method according to any one of claims 15 to 28.

**34.** An encoding and decoding system, comprising an encoder and a decoder, wherein the encoder is configured to perform the encoding and decoding method according to any one of claims 1 to 14, and the decoder is configured to perform the encoding and decoding method according to any one of claims 15 to 28.

**35.** A storage medium storing instructions having stored therein instructions that, when executed by a communication device, cause the communication device to perform the encoding and decoding method according to any one of claims 1 to 14 or perform the encoding and decoding method according to any one of claims 15 to 28.

Communication system 100
Encoder 101
Decoder102

Fig.1

encoder
decoder
S2101: downmixing channels in one or more channel groups to generate channel information for the one or more channel groups respectively
S2102: sending the channel information of the one or more channel groups
S2103:decoding the channel information of the one or more channel groups to obtain the channel information for the one or more channel groups respectively

Fig.2

S3101: the encoder downmixing channels in one or more channel groups to generate channel information for the one or more channel groups respectively
S3102: the encoder sends the channel information of the one or more channel groups

Fig.3A

S3201:encoder downmixing channels in one or more channel groups to generate channel information for the one or more channel groups respectively

Fig.3B

S4101: the decoder decodes channel information of one or more channel groups to obtain the channel information for the one or more channel groups respectively

Fig.4

encoder
decoder
S5101: the encoder downmixing channels in one or more channel groups to generate channel information for the one or more channel groups respectively
S5102: the decoder decodes channel information of one or more channel groups to obtain the channel information for the one or more channel groups respectively

Fig.5

S6101: an encoding end downmixing a grouped three-channel and generates side information

Fig.6

7100
7101
transceiver module
7102
processing module

Fig.7A

7200
7201
transceiver module
7202
processing module

Fig.7B

8100
8101
processor
transceiver
8103
8102
memory
interface circuit
8104

Fig.8A

8200
8201
processor
8203
memory
interface circuit
8202

Fig.8B

**INTERNATIONAL SEARCH REPORT**

International application No.
**PCT/CN2023/128806**

**A. CLASSIFICATION OF SUBJECT MATTER**

H04S 7/00(2006.01)i

According to International Patent Classification (IPC) or to both national classification and IPC

**B. FIELDS SEARCHED**

Minimum documentation searched (classification system followed by classification symbols)

IPC:H04S

Documentation searched other than minimum documentation to the extent that such documents are included in the fields searched

Electronic data base consulted during the international search (name of data base and, where practicable, search terms used)

WPABS, WPABSC, DWPI, VEN, CNTXT, CNKI, ENTXT, ENTXTC, CJFD: 编码, 解码, 编解码, 译码, 声道信息, 边信息, 声道数量, 声道标识, 分组信息, 空间感, 方位感, 三维, encod+, decod+, sound channel, channel number, identity, group, spatial, orientation, three dimention

**C. DOCUMENTS CONSIDERED TO BE RELEVANT**

| Category* | Citation of document, with indication, where appropriate, of the relevant passages | Relevant to claim No. |
|---|---|---|
| X | KR 20080093024 A (LG ELECTRONICS INC.) 17 October 2008 (2008-10-17) description, paragraphs [31]-[33], [50]-[54], and [261], and figure 1 | 1, 10, 14, 15, 24, 28-35 |
| A | KR 20080093024 A (LG ELECTRONICS INC.) 17 October 2008 (2008-10-17) description, paragraphs [31]-[33], [50]-[54], and [261], and figure 1 | 2-9, 11-13, 16-23, 25-27 |
| A | CN 116434760 A (BEIJING XIAOMI MOBILE SOFTWARE CO., LTD.) 14 July 2023 (2023-07-14) entire document | 1-35 |
| A | CN 116434760 A (BEIJING XIAOMI MOBILE SOFTWARE CO., LTD.) 14 July 2023 (2023-07-14) entire document | 1-35 |
| A | CN 114023338 A (HUAWEI TECHNOLOGIES CO., LTD.) 08 February 2022 (2022-02-08) entire document | 1-35 |
| A | CN 113948097 A (HUAWEI TECHNOLOGIES CO., LTD.) 18 January 2022 (2022-01-18) entire document | 1-35 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **21 November 2023** | **21 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/128806**

| Patent document cited in search report | Publication date (day/month/year) | Patent family member(s) | Publication date (day/month/year) |
|---|---|---|---|
| KR 20080093024 A | 17 October 2008 | KR 20070080594 A | 10 August 2007 |
| | | KR 100913091 B1 | 19 August 2009 |
| | | JP 2009526263 A | 16 July 2009 |
| | | KR 20070080592 A | 10 August 2007 |
| | | KR 100878814 B1 | 14 January 2009 |
| | | WO 2007091843 A1 | 16 August 2007 |
| | | JP 2009526261 A | 16 July 2009 |
| | | JP 5199129 B2 | 15 May 2013 |
| | | JP 2009526259 A | 16 July 2009 |
| | | JP 5054034 B2 | 24 October 2012 |
| | | TW 200921644 A | 16 May 2009 |
| | | TWI 483244 B | 01 May 2015 |
| | | WO 2007091845 A1 | 16 August 2007 |
| | | AU 2007212845 A1 | 16 August 2007 |
| | | AU 2007212845 B2 | 28 January 2010 |
| | | JP 2009526258 A | 16 July 2009 |
| | | JP 5173839 B2 | 03 April 2013 |
| | | EP 1984915 A1 | 29 October 2008 |
| | | EP 1984915 A4 | 09 June 2010 |
| | | EP 1984915 B1 | 07 September 2016 |
| | | EP 1984913 A1 | 29 October 2008 |
| | | EP 1984913 A4 | 12 January 2011 |
| | | KR 20070080602 A | 10 August 2007 |
| | | KR 100897809 B1 | 15 May 2009 |
| | | WO 2007091847 A1 | 16 August 2007 |
| | | BRPI 0707498 A2 | 10 May 2011 |
| | | EP 1984912 A1 | 29 October 2008 |
| | | EP 1984912 A4 | 09 June 2010 |
| | | KR 20070080600 A | 10 August 2007 |
| | | KR 100863480 B1 | 16 October 2008 |
| | | WO 2007091848 A1 | 16 August 2007 |
| | | US 2009028345 A1 | 29 January 2009 |
| | | US 8638945 B2 | 28 January 2014 |
| | | EP 1982327 A1 | 22 October 2008 |
| | | EP 1982327 A4 | 05 May 2010 |
| | | KR 20070080598 A | 10 August 2007 |
| | | KR 100878816 B1 | 14 January 2009 |
| | | KR 20080093415 A | 21 October 2008 |
| | | KR 101014729 B1 | 16 February 2011 |
| | | TW 200740267 A | 16 October 2007 |
| | | TWI 329465 B | 21 August 2010 |
| | | WO 2007091849 A1 | 16 August 2007 |
| | | EP 1982326 A1 | 22 October 2008 |
| | | EP 1982326 A4 | 19 May 2010 |
| | | KR 20080093416 A | 21 October 2008 |
| | | KR 100983286 B1 | 24 September 2010 |
| | | TW 200740266 A | 16 October 2007 |
| | | TWI 329464 B | 21 August 2010 |
| | | US 2014222439 A1 | 07 August 2014 |
| | | US 9626976 B2 | 18 April 2017 |

Form PCT/ISA/210 (patent family annex) (July 2022)

**INTERNATIONAL SEARCH REPORT**
**Information on patent family members**

International application No.
**PCT/CN2023/128806**

| Patent document cited in search report | Publication date (day/month/year) | Patent family member(s) | Publication date (day/month/year) |
|---|---|---|---|
| | | US 2009248423 A1 | 01 October 2009 |
| | | US 8612238 B2 | 17 December 2013 |
| | | WO 2007091850 A1 | 16 August 2007 |
| | | KR 20070080597 A | 10 August 2007 |
| | | KR 100878815 B1 | 14 January 2009 |
| | | KR 20080093418 A | 21 October 2008 |
| | | KR 101203839 B1 | 21 November 2012 |
| | | US 2009037189 A1 | 05 February 2009 |
| | | US 8285556 B2 | 09 October 2012 |
| | | KR 20070080595 A | 10 August 2007 |
| | | KR 100902898 B1 | 16 June 2009 |
| | | KR 20080093419 A | 21 October 2008 |
| | | JP 2009526264 A | 16 July 2009 |
| | | KR 20070080593 A | 10 August 2007 |
| | | KR 100921453 B1 | 13 October 2009 |
| | | JP 2009526262 A | 16 July 2009 |
| | | JP 5173840 B2 | 03 April 2013 |
| | | JP 2009526260 A | 16 July 2009 |
| | | JP 5054035 B2 | 24 October 2012 |
| | | CA 2637722 A1 | 16 August 2007 |
| | | CA 2637722 C | 05 June 2012 |
| | | EP 1987512 A1 | 05 November 2008 |
| | | EP 1987512 A4 | 19 May 2010 |
| | | KR 20080110920 A | 19 December 2008 |
| | | EP 1984914 A1 | 29 October 2008 |
| | | EP 1984914 A4 | 23 June 2010 |
| | | KR 20070080601 A | 10 August 2007 |
| | | KR 100908055 B1 | 15 July 2009 |
| | | US 2009060205 A1 | 05 March 2009 |
| | | US 8712058 B2 | 29 April 2014 |
| | | KR 20070080599 A | 10 August 2007 |
| | | KR 100863479 B1 | 16 October 2008 |
| | | US 2009012796 A1 | 08 January 2009 |
| | | US 8296156 B2 | 23 October 2012 |
| | | US 2009010440 A1 | 08 January 2009 |
| | | US 8625810 B2 | 07 January 2014 |
| | | TW 200802307 A | 01 January 2008 |
| | | TWI 331322 B | 01 October 2010 |
| | | KR 20080093417 A | 21 October 2008 |
| | | KR 100991795 B1 | 04 November 2010 |
| | | WO 2007091842 A1 | 16 August 2007 |
| | | KR 20070080596 A | 10 August 2007 |
| | | KR 100902899 B1 | 15 June 2009 |
| | | US 2009245524 A1 | 01 October 2009 |
| | | US 8160258 B2 | 17 April 2012 |
| | | KR 20080094775 A | 24 October 2008 |
| CN 116434760 A | 14 July 2023 | None | |
| CN 114023338 A | 08 February 2022 | None | |
| CN 113948097 A | 18 January 2022 | None | |

Form PCT/ISA/210 (patent family annex) (July 2022)